# EUROPÄISCHE PATENTSCHRIFT

(11) **EP 0 776 282 B1**
(45) Veröffentlichungstag und Bekanntmachung des Hinweises auf die Patenterteilung: **07.10.1998**
(21) Anmeldenummer: 95926825.1
(22) Anmeldetag: 15.08.1995
(51) Int. Cl.: B60R 21/16, D03D 1/02

(54) **UNBESCHICHTETES GEWEBE FÜR AIRBAG**
UNCOATED AIRBAG FABRIC
TISSU NON ENDUIT POUR SACS GONFLABLES

(30) Priorität: 25.08.1994 CH 2600/94
(43) Veröffentlichungstag der Anmeldung: 04.06.1997
(73) Patentinhaber: Rhodia Filtec AG, 6021 Emmenbrücke (CH)
(72) Erfinder: BERGEN, Eberhard, CH-6032 Emmenbrücke (CH); LALONDE, Remi, CH-6020 Emmenbrücke (CH); LANG, Bruno, CH-6275 Ballwil (CH)
(74) Vertreter: Herrmann, Peter Johannes, Dr.
(86) Internationale Anmeldenummer: CH9500180
(87) Internationale Veröffentlichungsnummer: WO9605985

(56) Entgegenhaltungen:
- EP-A- 0 416 483
- EP-A- 0 436 950
- EP-A- 0 442 373
- EP-A- 0 501 295
- EP-A- 0 509 399

## Beschreibung

Die Erfindung betrifft ein unbeschichtetes Gewebe mit Leinwand- oder Ripstopbindung aus einem Polyamidfilamentgarn mit einem Fibrillentiter 1,5 bis 7 dtex, einer Festigkeit von 50 bis 80 cN/tex und einer Dehnung von 15 bis 30 %, zur Herstellung eines Aufprallgaskissens (Airbag) sowie ein Verfahren zu dessen Herstellung.

Unbeschichtete Gewebe aus Polyamid 6.6 sind bekannt (EP-A-0436 950). Dabei ist es zur Erzielung einer geringen Luftdurchlässigkeit offenbar erforderlich zum Einsatz im Gewebe ein Filament mit einem Heissluftschrumpf, gemessen bei 160°C von 6-15 % zu verwenden. Das Rohgewebe wird anschliessend in einem wässrigen Bad in einem Temperaturbereich zwischen 60 und 140°C schockgeschrumpft. Mit dem bekannten Verfahren werden bei einer Leinwandbindung jedoch nur Luftdurchlässigkeiten von 3 und mehr l/dm²/min bei 500 Pa erzielt. Solche an sich geringe und von Airbag-Systemherstellern geforderte Luftdurchlässigkeiten sind für viele Anwendungen ausreichend, die dafür erforderlichen Garne lassen sich wegen des hohen Thermoschrumpfes und der damit hohen Aufwickelspannung nicht oder nur sehr schwer im Spinnstreckverfahren herstellen.

Bei der Verwendung von hochschrumpfenden Garnen (über 6%) sind besondere Massnahmen bei dessen Herstellung hinsichtlich Fixieren des Thermoschrumpfes durch starke und gleichmässige Abkühlung ohne Bildung von Spannungsdifferenzen zu beachten. Das Verstrecken hat dabei entweder über Fadenscharverstreckung mit fadenspannungskontrollierter Abkühlung zu erfolgen oder wird durch vertikale Einzelfadenverstreckung meist in Kopsaufmachung ausgeführt. Für solche Garne ist in der Praxis ein Umspulprozess von Kops auf Zylinder oder eben eine Fadenscharverstreckung mit spannungskontrollierter Abkühlung erforderlich.

Aufgabe der Erfindung ist es, ein Gewebe zur Verfügung zu stellen, das eine Luftdurchlässigkeit aufweist, welche annähernd derjenigen eines beschichteten Gewebes entspricht und auf einfache und damit auch auf wirtschaftliche Weise hergestellt werden kann. Dabei soll das Airbaggewebe eine sehr niedrige Luftdurchlässigkeit, eine hohe Dimensionssstabilität und eine hohe Weiterreissfestigkeit aufweisen.

Eine weitere Aufgabe ist es, für die Herstellung eines Airbaggewebes einen Ersatz der beschichteten durch unbeschichtete Gewebe zu finden. Die Beschichtung ist nicht nur ein aufwendiger und verteuernder Verfahrensschritt, sondern das resultierende Gewebe weist auch eine um etwa 10 % - 15 % schlechtere Faltbarkeit und grosses Packvolumen auf.

Die erfindungsgemässe Aufgabe wird dadurch gelöst, dass das Gewebe gleichzeitig eine Luftdurchlässigkeit von < 3 l/dm²/min, einen Restkochschrumpf < 2 % und eine Weiterreisskraft in Kette und Schuss von > 110 N aufweist. Es ist zweckmäsig wenn die Luftdurchlässigkeit 1-3 l/dm²/min beträgt.

Es ist zweckmässig, wenn das Gewebe in einem 5 cm Gewebestreifentest eine Reisskraft von mehr als 2500 N aufweist. Dadurch wird die Sicherheit des Gewebes im Airbag beim Aufprall gewährleistet.

Für das Verfahren zur Herstellung des unbeschichteten Gewebes hat sich ein in einem Spinnstreckverfahren hergestellten Polyamid- Multifilamentgarn mit einem Fibrillentiter 1,5 bis 7 dtex als besonders geeignet erwiesen. Dabei ist es besonders vorteilhaft, wenn das Polyamidfilamentgarn einen Heissluftschrumpf von < 6 %, gemessen bei 160°C in Luft und unter 0.5 cN/tex Vorspannung aufweist und später als Gewebe in einem geschlossenen Behälter bei einer Temperatur von 80 bis 160°C und einer relativen Luftfeuchtigkeit von 90 bis 100 % behandelt wird.

Es wurde in überraschender Weise gefunden, dass auch mit einem niedriger schrumpfenden Ausgangsmaterial sehr geringe Luftdurchlässigkeiten erzielbar sind. Luftdurchlässigkeiten über 3 l/dm²/min sind zudem auch für moderne Auslösesysteme mit weniger und feineren Partikeln nur bedingt tolerierbar; Luftdurchlässigkeiten unter 3 l/dm²/min, bevorzugt unter 2,5 l/dm²/min und weniger haben sich als ausgezeichnet für Airbaggewebe erwiesen.

Die Luftdurchlässigkeit des Gewebes wird nach DIN 53 887 gemessen, bei einem Luftdruck von 500 Pa.

Der Thermoschrumpf und der Kochschrumpf wurden nach DIN 53 866 gemessen, wobei beim Thermoschrumpf die Lufttemperatur 160° C und die Vorspannung 0,5 cN/tex betrug. Die Weiterreissfestigkeit wurde gemessen nach DIN 53 859 T 2; die Reisskraft und Bruchdehnung nach DIN 83 835.

Als Ausgangsmaterial dient ein flusenarmes in einem Spinn-Streckverfahren hergestelltes Polyamidfilamentgarn in einem Einzeltiterbereich von 1,5 bis 7 dtex, insbesondere 3 dtex oder feiner. Es hat sich als besonders zweckmässig erwiesen, dass das Polyamidfilament einen Heissluftschrumpf von < 6 %, insbesondere < 5,5 %, gemessen bei 160°C und 0,5 cN/tex Vorspannung sowie eine Mindestschrumpfkraft von 0.20 cN/tex, gemessen nach DIN 53 866 bei 160°C, aufweist. Mit so einem Niederschrumpfgarn ist, beispielsweise die Möglichkeit zu Herstellung und erfolgreichen Verarbeitung spinngestreckter zylindrischer Grossaufmachungen von 5-15 kg gegeben. Das Gewebe wird in bekannter Weise durch Leinwandbindung oder Ripstopbindung hergestellt und in einem geschlossenen Behälter bei einer Temperatur von 80 bis 160°C und einer relativen Luftfeuchtigkeit von 90 bis 100 % behandelt.

Die Erfindung soll anhand von Beispielen näher erläutert werden.

### Beispiel 1

Ein Polyamid 6.6 Filament mit einem Titer von dtex 350 f104 Z 60 mit einem Thermoschrumpf von 5,5 %, gemessen bei 160°C unter einer Vorspannkraft von 0,5 cN/tex, einer Thermoschrumpfkraft von 90 cN, bzw. 0.25 cN/tex, gemessen bei 160°C unter einer Vorspannkraft von 0,5 cN/tex sowie einem Kochschrumpf von 6,7 % wurde ein Leinwandgewebe hergestellt. Das Gewebe wurde anschliessend in einer Kammer mit gesättigtem Wasserdampf bei Temperaturen über 100°C behandelt und anschliessend auf einem Spannrahmen getrocknet und fixiert.

Das Gewebe hat folgende Eigenschaften:

| | Kette | Schuss |
|---|---|---|
| Faden pro cm | 28 | 24 |
| Reisskraft N/5cm | 2900 | 2700 |
| Restkochschrumpf (%) | 1,4 | 1,5 |
| Weiterreisskraft (N) | 115 | 110 |
| Bruchdehnung (%) | 37 | 28 |
| Gewicht des Gewebes | 215 g/m² | |
| Luftdurchlässigkeit im Gewebe | 2,55 l/dm²/min | |

### Beispiel 2

Ein Polyamid 6.6 Filament mit einem Titer von dtex 470 f68 Z 60 mit ansonsten gleichen Eigenschaften wie Beispiel 1, wurde unter den gleichen Bedingungen hergestellt.

Das Gewebe hat folgende Eigenschaften:

| | Kette | Schuss |
|---|---|---|
| Faden pro cm | 23 | 22 |
| Reisskraft N/5cm | 3400 | 3550 |
| Restkochschrumpf (%) | 1,7 | 1,7 |
| Weiterreisskraft (N) | 174 | 177 |
| Bruchdehnung (%) | 41 | 28 |
| Gewicht des Gewebes | 240 g/m² | |
| Luftdurchlässigkeit im Gewebe | 2,45 l/dm²/min | |

### Beispiel 3

Ein Polyamid 6.6 Filament mit einem Titer von dtex 470 f68 Z 0.00 ansonsten gleichen Eigenschaften wie Beispiel 1, wurde unter den gleichen Bedingungen hergestellt.

Das Gewebe hat folgende Eigenschaften:

| | Kette | Schuss |
|---|---|---|
| Faden pro cm | 24 | 21 |
| Reisskraft N/5cm | 3500 | 3100 |
| Restkochschrumpf (%) | 1,5 | 0 |
| Weiterreisskraft (N) | 171 | 171 |
| Bruchdehnung (%) | 35 | 34,5 |
| Gewicht des Gewebes | 245 g/m² | |
| Luftdurchlässigkeit im Gewebe | 3,0 l/dm²/min | |

Aus den Beispielen ist ersichtlich, dass es mit dem erfindungsgemässen Verfahren erstmals gelungen ist auch ein in Kombination Thermoschrumpf < 6% und einer Schrumpfkraft > 0.20 cN/tex Luftdurchlässigkeiten von weniger als 3 l/dm²/min zu erhalten.

## Patentansprüche

1. Unbeschichtetes Gewebe mit Leinwand- oder Ripstopbindung aus einem Polyamidfilamentgarn mit einem Fibrillentiter von 1,5 bis 7 dtex, einer Festigkeit von 50 bis 80 cN/tex und einer Dehnung von 15 bis 30 %, zur Herstellung eines Aufprallgaskissens, dadurch gekennzeichnet, dass das Gewebe gleichzeitig eine Luftdurchlässigkeit von < 3 l/dm²/min, einen Restkochschrumpf < 2 % und eine Weiterreisskraft in Kette und Schuss von > 110 N aufweist.

2. Unbeschichtetes Gewebe nach Anspruch 1, dadurch gekennzeichnet, dass das Gewebe im 5-cm Gewebeteststreifen eine Reisskraft von > 2500 N aufweist.

3. Verfahren zur Herstellung eines unbeschichteten Gewebes mit Leinwand- oder Ripstopbindung aus einem in einem Spinnstreckverfahren hergestellten Polyamidfilament mit einem Fibrillentiter 1,5 bis 7 dtex, für Aufprallgaskissen, dadurch gekennzeichnet, dass das Polyamidfilament einen Heissluftschrumpf von < 6 %, gemessen bei einer Vorspannung von 0,5 cN/tex und 160°C in Luft, sowie eine Mindestschrumpfkraft von 0.20 cN/tex aufweist, und das Gewebe in einem geschlossenen Behälter bei einer Temperatur von 80 bis 160°C und einer relativen Luftfeuchtigkeit von 90 bis 100 % behandelt wird.

## Claims

1. An uncoated fabric with linen or ripstop binding of a polyamide filament yarn with a fibril titer of 1.5 to 7 dtex, a strength of 50 to 80 cN/tex and an elongation of 15 to 30 %, for producing an impact gas bag, characterized in that the fabric simultaneously has an air permeability of < 1/dm²/min, a residual boiling shrinkage of < 2 %, and a tear propagation strength in warp and weft of > 110 N.

2. The uncoated fabric of claim 1, characterized in that the fabric, in the 5 cm fabric test strip, has a tear strength of > 2500 N.

3. A process for producing an uncoated fabric with linen or ripstop bonding of a polyamide filament, produced by a stretch-spinning process, with a fibril titer of 1.5 to 7 dtex for impact gas bags, characterized in that the polyamide filament has a hot air shrinkage of < 6 %, measured at a bias of 0.5 cN/tex and 160°C in air, and a minimum shrinkage force of 0.20 cN/tex, and the fabric is treated in a closed container at a temperture of 80 to 160°C and a relative humidity of 90 to 100%.

## Revendications

1. Tissu non enduit avec une construction Toile ou Ripstop à base de fil filamentaire en polyamide possédant un titre au filament de 1.5 à 7 dtex, une ténacité de 50 à 80 cN/tex et un allongement de 15 à 30 %, pour la fabrication de sacs gonflables de sécurité, caractérisé en ce que le tissu montre simultanément une perméabilité à l'air inférieure à 3 l/dm²/mn, un retrait résiduel à l'eau bouillante inférieur à 2 % et une résistance à la déchirure en chaine et en trame supérieure à 110 N.

2. Tissu non enduit selon la revendication 1, caractérisé en ce que le tissu montre une résistance à la rupture supérieure à 2500 N lorsque mesurée sur bandes test de 5 cm.

3. Procédé pour la réalisation d'un tissu non enduit avec une construction Toile ou Ripstop à base de fil filamentaire en polyamide fabriqué par un procédé de filature à étirage intégré et possédant un titre au filament de 1.5 à 7 dtex, pour coussins gonflables de sécurité, caractérisé en ce que le filament polyamide montre un retrait thermique inférieur à 5 % mesuré dans l'air chaud à 160°C sous une pré-tension de 0.5 cN/tex, ainsi qu'une force de retrait minimale de 0.20 cN/tex, et que le tissu est traité dans un récipient fermé à une température de 80 à 160°C et une humidité relative de 90 à 100 %.
